Europäisches Patentamt

European Patent Office

Office européen des brevets

(11) Numéro de publication: **0 116 493**
A2

## (12) **DEMANDE DE BREVET EUROPEEN**

(21) Numéro de dépôt: **84400113.1**

(22) Date de dépôt: **20.01.84**

(51) Int. Cl.³: **F 16 C 11/06**
**F 16 C 23/04**

(30) Priorité: **28.01.83 FR 8301663**

(43) Date de publication de la demande:
**22.08.84 Bulletin 84/34**

(84) Etats contractants désignés:
**AT BE CH DE GB IT LI NL SE**

(71) Demandeur: **SKF COMPAGNIE D'APPLICATIONS
MECANIQUES & CIE. S.N.C.
Route de Roybon
F-26240 Saint-Vallier-s/Rhône(FR)**

(72) Inventeur: **Pruvost, Bernard
3, Chemin du Vieux Moulin
F-07300 Tournon(FR)**

(74) Mandataire: **Boivin, Claude
9, rue Edouard-Charton
F-78000 Versailles(FR)**

(54) **Procédé de fabrication de rotules ou autres articulations autolubrifiées.**

(57) Selon ce procédé, on enfile la bague intérieure (1) de la rotule dans une gaine thermorétractable (5) d'épaisseur déterminée, on rétracte la gaine (5) sur cette bague intérieure, on monte cette dernière dans une ébauche de bague extérieure (7), on déforme cette ébauche (7) de façon que la gaine (5) soit serrée entre elle et la bague intérieure (1), après usinage de l'ébauche on traite l'ensemble de façon à éliminer la gaine thermorétractable et à former ainsi entre les deux bagues un espace libre (9) dont l'épaisseur correspond à celle de la gaine (5), et on injecte une résine autolubrifiante (3) dans cet espace.

FIG. 6

EP 0 116 493 A2

- 1 -

Procédé de fabrication de rotules ou autres articulations autolubrifiées

Les rotules autolubrifiées, dans lesquelles les deux bagues de la rotule sont séparées l'une de l'autre par une résine autolubrifiante, du type phénolique, ablative ou kérimide, chargée ou non de matériaux tels que du polytétrafluoréthylène par exemple, sont fréquemment utilisés aussi bien en mécanique que dans l'aéronautique ou même dans la médecine. Mais les rotules de ce genre jusqu'à présent réalisées sont coûteuses et présentent une dispersion de résultats non négligeable.

La présente invention a pour objet un procédé de fabrication de rotules ou articulations analogues dont les frais de fabrication sont réduits et qui présentent des caractéristiques d'usure exceptionnelles.

Le procédé selon l'invention est caractérisé en ce qu'on enfile la bague intérieure de la rotule dans une gaine thermorétractable d'épaisseur déterminée, qu'on rétracte la gaine sur cette bague intérieure, qu'on monte cette dernière dans une ébauche de bague extérieure, qu'on déforme cette ébauche de façon que la gaine soit serrée entre elle et la bague intérieure, qu'après usinage de l'ébauche on traite l'ensemble de façon à éliminer la gaine thermorétractable et à former ainsi entre les deux bagues un espace libre dont l'épaisseur correspond à celle de la gaine, et qu'on injecte une résine autolubrifiante dans cet espace.

La résine autolubrifiante peut être armée de fibres, par exemple de verre ou de carbone. On peut placer ces fibres dans la gaine, avant sa rétraction, ou les mélanger à la résine d'injection.

On peut éventuellement placer dans la gaine, avant sa rétraction, une couche de fibres fusibles et éliminer ensuite ces fibres en même temps que la gaine.

Il y a avantage à placer dans une même gaine plusieurs bagues intérieures et, après rétraction de la gaine, à séparer les bagues.

On a décrit ci-après, à titre d'exemple non limitatif, un mode de mise en oeuvre du procédé selon l'invention avec référence au dessin annexé dans lequel :

La Figure 1 est un dessin en coupe d'une rotule;

Les Figures 2 à 8 montrent les diverses étapes du procédé.

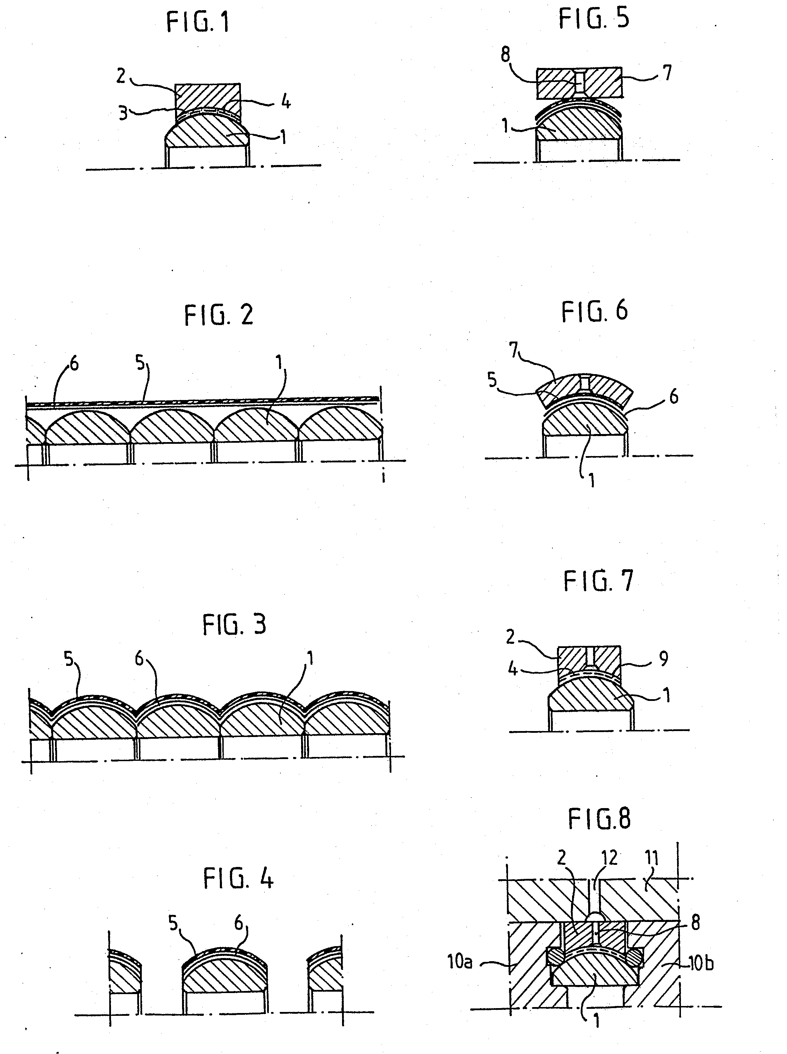

Pour réaliser une rotule comprenant une bague intérieure 1 et une bague extérieure 2, séparées l'une de l'autre par un composite autolubrifiant 3, armé de fibres 4 (Figure 1), on commence par enfiler dans une gaine thermorétractable 5 d'épaisseur donnée une série de bagues intérieures 1 dont la partie sphérique a été enduite d'un produit de démoulage, en disposant dans la gaine une couche de fibres fusibles et une couche de fibres propres à armer la résine autolubrifiante; par exemple, de verre ou de carbone T H M; l'ensemble de ces deux couches est désigné au dessin par la référence 6. Puis on procède à la rétraction de la gaine 5, comme on le voit à la Figure 3, et on sépare chaque bague intérieure 1 (Figure 4).

On emmanche ensuite chaque bague intérieure 1 dans une ébauche de bague extérieure 7 qui comporte un orifice d'injection 8 (Figure 5) et on déforme l'ensemble, par exemple par emboutissage, de façon à donner à la face intérieure de l'ébauche la courbure désirée (Figure 6). Puis on usine la bague extérieure et on traite l'ensemble des deux bagues de façon à éliminer la gaine rétractée 5 et la couche de fibres de matière fusible. Les deux bagues 1 et 2 sont alors séparées l'une de l'autre par un espace 9 d'épaisseur connue, dans lequel se trouve de la fibre de verre ou autre fibre 4 (Figure 7).

Il ne reste plus qu'à injecter une résine autolubrifiante, par exemple du polytétrafluoréthylène entre les deux bagues 1 et 2 et à faire polymériser cette résine. L'injection peut se faire par exemple comme représenté à la Figure 8 dans un moule comprenant deux éléments intérieurs 10a et 10b, et un élément extérieur 11 muni d'un orifice d'injection 12. La résine pénètre par les orifices 8 et 12 dans l'espace 9 séparant les deux bagues 1 et 2 en noyant les fibres 4.

En variante, on pourrait supprimer la couche de fibres fusibles et celle de fibres d'armature en mélangeant ces dernières fibres à la résine injectée dans l'espace 9.

Revendications

1. Procédé de fabrication de rotules ou autres articulations autolubrifiées,
caractérisé en ce qu'on enfile la bague intérieure 1 de la rotule dans une gaine thermorétractable 5 d'épaisseur déterminée, qu'on rétracte la gaine 5 sur cette bague intérieure, qu'on monte cette dernière dans une ébauche de bague extérieure 7, qu'on déforme cette ébauche 7 de façon que la gaine 5 soit serrée entre elle et la bague intérieure 1, qu'après usinage de l'ébauche on traite l'ensemble de façon à éliminer la gaine thermorétractable et à former ainsi entre les deux bagues un espace libre 9 dont l'épaisseur correspond à celle de la gaine 5, et qu'on injecte une résine autolubrifiante 3 dans cet espace.

2. Procédé selon la revendication 1,
caractérisé en ce que, dans la gaine 5, avant sa rétraction, on place des fibres propres à armer la résine autolubrifiante.

3. Procédé selon la revendication 1,
caractérisé en ce qu'on mélange à la résine d'injection des fibres propres à armer la résine autolubrifiante.

4. Procédé selon l'une des revendications 1 à 3,
caractérisé en ce qu'on place dans la gaine 5 avant sa rétraction, une couche de fibres fusibles et en ce qu'on élimine ensuite ces fibres en même temps que la gaine.

5. Procédé selon l'une quelconque des revendications précédentes,
caractérisé en ce qu'on place dans une même gaine 5 plusieurs bagues intérieures 1 et en ce que, après rétraction de la gaine, on sépare les bagues.

6. Procédé selon l'une quelconque des revendications précédentes,
caractérisé en ce qu'on prévoit un trou d'injection 8 dans l'ébauche de la bague extérieure.

FIG.1

FIG.2

FIG.3

FIG.4

FIG.5

FIG.6

FIG.7

FIG.8